# NEUE EUROPÄISCHE PATENTSCHRIFT

(11) **EP 2 045 643 B2**
(45) Veröffentlichungstag und Bekanntmachung des Hinweises auf die Entscheidung über den Einspruch: **30.10.2013**
(45) Hinweis auf die Patenterteilung: 28.04.2010
(21) Anmeldenummer: 08163497.4
(22) Anmeldetag: 01.06.2001
(51) Int. Cl.: G02F 1/365, G02B 21/00, G02B 6/255, G02B 21/06, G01J 3/02, B82Y 20/00, G01J 3/12, G01J 3/10, G02F 1/35, G02B 6/02

(54) **Scanmikroskop zum Untersuchen mikroskopischer Präparate und Beleuchtungseinrichtung für ein Scanmikroskop**
Scanning microscope for examining microscopic preparations and lighting device for same
Microscope scanner d'analyse de préparations microscopiques et dispositif d'éclairage pour un microscope scanner

(30) Priorität: 17.06.2000 DE 10030013; 29.03.2001 DE 10115509
(43) Veröffentlichungstag der Anmeldung: 08.04.2009
(62) Teilanmeldung aus: 01112880.8
(73) Patentinhaber: Leica Microsystems CMS GmbH, 35578 Wetzlar (DE)
(72) Erfinder: Birk, Holger, 74909 Meckesheim (DE); Storz, Rafael, 8330 Pfäffikon (CH)
(74) Vertreter: Schaumburg, Thoenes, Thurn, Landskron, Eckert

(56) Entgegenhaltungen:
- EP-A- 0 886 174
- EP-A2- 0 977 069
- WO-A1-00/49435
- DE-A1- 19 702 753
- DE-A1- 19 829 944
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592
- K. UEDA: '"Advanced Laser Sources for Multiphoton Microscope"' LASER REVIEW Nr. 27(12), 01 Dezember 1999, ISSN 27(12) Seite 805-811

## Beschreibung

Die Erfindung betrifft ein Scanmikroskop Anordnung zum Untersuchen mikroskopischer Präparate. Im Besonderen betrifft die Erfindung ein Scanmikroskop Anordnung zum Untersuchen mikroskopischer Präparate, das einen Laser und ein optisches Mittel umfasst, das das von dem Laser erzeugte Licht auf eine zu untersuchende Probe abbildet. Das Scanmikroskop kann auch als konfokales Mikroskop ausgestaltet sein.

Des Weiteren betrifft die Erfindung eine Beleuchtungseinrichtung für ein Scanmikroskop.

In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz ist beispielsweise ein Anordnung mit einem einzelnen, mehrere Laserlinien emittierenden Laser bekannt. Derzeit werden hierfür meist Mischgaslaser, insbesondere ArKr-Laser, eingesetzt.

Im Einsatz sind auch Diodenlaser und Festkörperlaser.

Aus der Patenschrift US-A-5,161,053 mit dem Titel "Confocal Microscope" ist ein konfokales Mikroskop bekannt, bei dem Licht einer externen Lichtquelle mit Hilfe einer Glasfaser zum Strahlengang des Mikroskops transportiert wird und das Ende der Glasfaser als Punktlichtquelle dient, so dass eine mechanische Blende überflüssig wird.

Das Emissionsspektrum von Lasern ist auf einen schmalen Wellenlängenbereich eingegrenzt, so dass zur simultanen Mehrlinienanregung das Licht mehrerer Laser zu einem Beleuchtungsstrahl vereinigt werden muss.

Die als Mehrlinieniaser meist eingesetzten Gaslaser sind sehr aufwendig und teuer. Darüber hinaus sind sie sehr wartungsbedürftig, was den Dauereinsatz bei vielen mikroskopischen Anwendungen erschwert.

Der Erfindung liegt die Aufgabe zugrunde, ein Scanmikroskop zu schaffen, das die Probenuntersuchung mit mehreren spektralen Linien ermöglicht, ohne dabei auf den Einsatz vom Mehrlinienlaser angewiesen zu sein.

Die objektive Aufgabe wird gelöst durch eine Anordnung mit den Merkmalen des Kennzeichnenden Teils des Anspruchs 1 bzw. 6, die z.B. dadurch gekennzeichnet ist, dass zwischen dem Laser und dem optischen Mittel ein optisches Bauelement vorgesehen ist, das das vom Laser erzeugte Licht bei einmaligem Durchlauf spektral verbreitert.

Eine weitere Aufgabe der Erfindung ist es, eine Beleuchtungseinrichtung für ein Scanmikroskop zu schaffen, die weitere spektrale Bereiche zugänglich macht, die bisher nicht adressierbar waren.

Die objektive Aufgabe wird gelöst durch eine Beleuchtungseinrichtung, die dadurch gekennzeichnet ist, dass an der Lichtaustrittsöffnung ein optisches Bauelement angebracht ist, das aus photonic-band-gap-material besteht.

Das optische Bauelement in der Form eines "photonic-band-gap-material" hat den Vorteil, dass durch den optisch nichtlineare Aufbau der Faser ein kurzer Laserimpuls verbreitert wird und somit ein spektral breites, kontinuierliches Lichtspektrum entsteht. Bei "Photonic-band-gap-material" handelt es sich um mikrostrukturiertes durchsichtiges Material. Meist durch Zusammenfügen von verschiedenen Dielektrika lässt sich dem resultierenden Kristall eine Bandstruktur für Photonen aufprägen, die an die elektronische Bandstruktur von Halbleitern erinnert.

Die Technik wird neuerdings auch bei Lichtleitfasern verwirklicht Die Fasern werden durch Ausziehen von strukturiert angeordneten Glasrohren hergestellt. Den Fasern liegt eine besondere Struktur zugrunde: In Faserrichtung sind kleine Kanülen frei gelassen, die einen Abstand von etwa 2-3 µm und einen Durchmesser von ca. 1 µm haben und meist mit Luft gefüllt sind. In der Mitte der Faser liegt keine Kanüle vor. Diese Art von Fasern sind als "photon crystal fibres", "holey fibers" oder "microstructured fibers" bekannt.

"Photon crystal fibres" können für die Erzeugung einer kontinuierlichen spektralen Verteilung über den gesamten sichtbaren Wellenlängen bereich eingesetzt werden. Hierzu wird das Licht eines Kurzpulslasers in die Faser eingekoppelt. Durch den optisch nichtlinearen Aufbau der Faser verbreitert sich das Frequenzspektrum des Lasers. Es entsteht ein spektral breites, kontinuierliches Lichtspektrum.

Das optische Bauelement ist in einer bevorzugten Ausgestaltung des Scanmikroskops aus einer Vielzahl von mikrooptischen Strukturelementen aufgebaut, die zumindest zwei unterschiedliche optische Dichten aufweisen. Ganz besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt. Die mikrooptischen Strukturelemente sind vorzugsweise Kanülen, Stege, Waben, Röhren oder Hohlräume.

Das optische Bauelement besteht in einer anderen Ausgestaltung aus nebeneinander angeordnetem Glas- oder Kunststoffmaterial und Hohlräumen, wobei erfindungsgemäß das optische Bauelement aus Photonic-Band-Gap-Material besteht und als Lichtleitfaser ausgestaltet ist, und wobei eine optische Diode vorgesehen ist, die eine Rückreflexion des Lichtstrahles des Lasers an den Enden der Lichtleitfaser unterdrückt.

Eine nicht beanspruchte und einfach zu realisierende Ausführungsvariante beinhaltet als optisches Bauelement eine herkömmliche Lichtleitfaser mit einem Faserkem, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der Faser beträgt in einer bevorzugten Ausgestaltung 150 µm außerhalb des Bereich der Verjüngung und der des Faserkems in diesem Bereich ca. 8 µm. Im Bereich der Verjüngung ist der Durchmesser der Faser auf ca. 2 µm reduziert. Der Faserkern Durchmesser liegt entsprechend im Nanometerbereich.

Zum Einsatz in der Mikroskopie ist es wichtig, Mittel zur Wellenlängenauswahl und zur Lichtleistungsstabilisierung zu implementieren. Daher lässt sich in vorteilhafter Weise ein solcher Faserlaser mit akusto- oder elektrooptischen, einstellbaren Filtern (AOTF), mit akusto- oder elektrooptischen Deflektoren (AOD), akusto- oder elektrooptischen Strahlteilern (AOBS) kombinieren. Diese können zum einen zur Wellenlängenauswahl als auch zur Ausblendung des Detektionslichtes verwendet werden (unsere deutsche Anmeldung DE 199 06 757 A1: "Optische Anordnung").

Insbesondere in der konfokalen Mikroskopie läßt sich das Faseraustrittsende als Punktlichtquelle nutzen, wodurch die Verwendung einer Anregungsblende überflüssig wird. Bei einer solchen Ausgestaltung wäre es von besonderem Vorteil, das Faserende selbst teilreflektierend zu beschichten, so dass dieser Teilreflektor einen Resonatorendspiegel bildet.

In weiteren Ausführungsformen sind Vorrichtungen zur Kompensation von Lichtleistungsschwankungen vorgesehen. Beispielsweise kann eine Regelschleife zur Lichtleistungsstabilisierung eingebaut werden, die parasitär die Lichtleistung im Strahlengang des Mikroskops misst und beispielsweise durch Variation der Pumptichtleistung oder mit Hilfe eines akusto- oder elektrooptischen Elements die Probenbeleuchtungslichtleistung konstant hält. Zu diesem Zweck könnten auch LCD-Abschwächer verwendet werden.

Ein weiterer Vorteil der Erfindung ist, wenn die Beleuchtungeeinrichtung bereits entsprechend gestaltet ist, dass sie mehrere spektrale Bereiche zur Beleuchtung liefert. Der Laser, der die Beleuchtungseinrichtung für ein Scanmikroskop darstellt, hat an der Lichtaustrittsöffnung ein optisches Bauelement befestigt. Das optische Bauelement besteht aus photonic-band-gap-material. Ferner kann das photonic-band-gap-material als Lichtleitfaser ausgestaltet sein.

In der Zeichnung ist der Erfindungsgegenstand schematisch dargestellt und wird anhand der Figuren nachfolgend beschrieben. Dabei zeigen:
- Fig. 1: eine Anordnung mit einem Konfokalmikroskop,
- Fig. 2: eine Anordnung, bei der auf ein Beleuchtungspinhole verzichtet wurde,
- Fig. 3: eine Anordnung mit Lichtleistungsstabilisierung,
- Fig. 4: eine nicht beanspruchte Ausführung des optischen Bauelements,
- Fig. 5: eine Ausführung des optischen Bauelements.

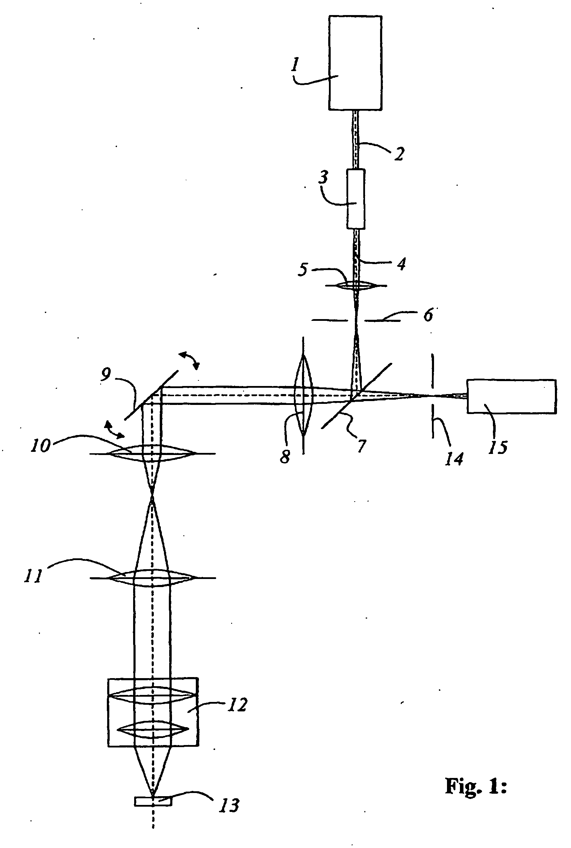

Fig. 1 zeigt ein Konfokalmikroskop, das ein optisches Bauelement 3 zur Aufweitung eines von einem Pulslaser 1 erzeugten Laserimpulses verwendet. Der Pulslaser 1 definiert einen gepulsten Laserstrahl 2, der durch das optische Bauelement 3 geleitet wird. Das optische Bauelement 3 ist ein "photonic-band-gap-material. Aus dem optischen Bauelement 3 tritt ein spektral breitbandiges Beleuchtungslicht 4 aus, das von einer ersten Optik 5 auf ein Beleuchtungspinhole 6 abgebildet wird und dann auf einen Strahlteiler 7 trifft. Vom Strahlteiler 7 gelangt das spektral breitbandige Beleuchtungslicht 4 zu einer zweiten Optik 8, die einen parallelen Lichtstrahl 4a erzeugt, der auf einen Scanspiegel 9 trifft. Dem Scanspiegel 9 sind mehrere Optiken 10 und 11 nachgeschaltet, die den Lichtstrahl 4a formen. Der Lichtstrahl 4a gelangt zu einem Objektiv 12, von dem er auf eine Probe 13 abgebildet wird. Das von der Probe reflektierte oder ausgesendete Licht definiert einen Beobachtungsstrahlengang 4b. Das Licht des Beobachtungsstrahlengang 4b tritt abermals durch die zweite Optik 8 und wird auf ein Detektionspinhole 14 abgebildet, das vor einem Detektor 15 setzt. Durch das optische Bauelement 3 ist es möglich, das für die Untersuchung der Probe 13 notwendige Laserlicht entsprechend dem gewünschten Spektrum zu erzeugen.

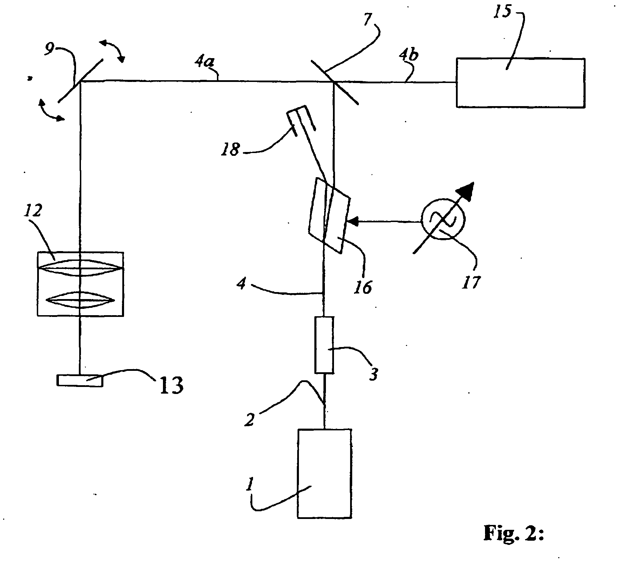

Das in Fig. 2 dargestellte Ausführungsbeispiel zeigt ein Konfokalmikroskop, bei dem auf das Beleuchtungspinhole 6 verzichtet wurde. Alle Elemente, die mit den Elementen aus Fig. 1 übereinstimmen, sind mit dem gleichen Bezugszeichen bezeichnet. Bei diesem Ausführungsbeispiel ist an Stelle der ersten Optik 5 ein AOTF 16 (acousto optical tunable filter) eingesetzt, der mit einer entsprechenden AOTF-Ansteuerung 17 verbunden ist. Da das optische Bauelement 3 ein breitbandiges Beleuchtungslicht 4 erzeugen kann, ist es notwendig, Mittel zur Wellenlängenauswahl und Lichtleistungsstabilisierung vorzusehen. In vorteilhafter Weise kann man akusto- oder elektrooptisch einstellbare Filter (AOTF) mit akusto- oder elektrooptischen Deflektoren (AOD) und akusto- oder elektrooptischen Strahlteilern (AOBS) kombinieren. Diese können zum einen zur Wellenlängenauswahl als auch zur Ausblendung des Detektionslichtes verwendet werden. Dem AOTF 16 ist ferner ein Strahlsumpf 18 zugeordnet, der die nicht verwendeten spektralen Anteile der Beleuchtungslicht fängt, um unnötige Störungen des Scanmikroskops zu vermeiden.

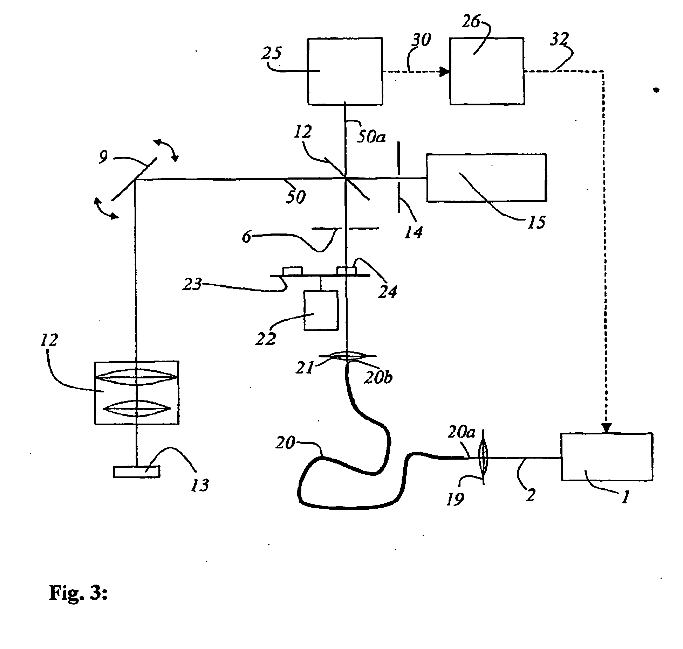

Erfindungsgemäß wird, wie in Fig. 3 dargestellt, als optisches Bauelement 3 eine Lichtleitfaser 20 verwendet, die aus dem photonic-band-gap-material besteht. Vom Pluslaser 1 wird der gepulste Laserstrahl 2 über eine Optik 19 in ein Eintrittsende 20a der Lichtleitfaser 20 eingekoppelt. Da die Lichtleitfaser 20 aus dem photonic-band-gap-material aufgebaut ist, tritt aus einem Austrittsende 20b ein spektral verbreiterter Laserimpuls aus, der über eine Optik 21 ausgekoppelt wird. Bevor der spektral verbreiterte Laserimpuls auf das Beleuchtungspinhole 6 trifft, wird eine spektrale Filterung vorgenommen. Dazu sind mehrere Farbfilter 24 auf einem Revolver 23 angeordnet. Ober einen Motor 22 ist der Revolver 23 drehbar, so dass die entsprechenden Farbfilter 24 in den Strahlengang eingebracht werden können. Ebenso ist eine lineare Anordnung der Farbfilter 24 denkbar, dabei werden die Farbfilter 24 mittels einer Linearbewegung in einen Beleuchtungsstrahlengang 50 verfahren. Der Beleuchtungsstrahlengang 50 nach dem Beleuchtungspinhole 6 ist mit dem Strahlengang aus Fig. 1 vergleichbar. Wie bereits in Fig. 1 erwähnt, lenkt der Strahlteiler 7 das Licht auf den Scanspiegel 9. Ein Teil des Licht tritt durch den Strahlteiler 7 hindurch und definiert einen Verluststrahlengang 50a. Dieser Anteil des Lichts ist für die Beobachtung oder Messung verloren. Aus diesem Grunde ist im Verluststrahlengang 50a ein Detektor 25 vorgesehen, der das Verlustlicht bestimmt und daraus eine elektronische Größe ermittelt, die mittels einer Leitung 30 an eine Regelungselektronik 26 geleitet wird. Die Regelungselektronik 26 ist über eine weitere Leitung 32 mit dem Pulslaser 1 verbunden. Über die Leitung 32 regelt die Regelungselektronik 26 die Intensität des Pulslasers 1 in der Weise, dass an der Probe 13 immer eine konstante lichtleistung auftrifft. Beispielsweise kann eine Regelschleife zur Lichtleistungsstabilisierung derart vorgesehen sein, dass sie parasitär die Lichtleistung im Strahlengang des Mikroskops misst und beispielsweise durch Variation der Pumplichtleistung oder mit Hilfe eines akusto- oder elektrooptischen Elements die Probenbeleuchtungslichtleistung konstant hält. Zu diesem Zweck könnten auch LCD-Abschwächer verwendet werden.

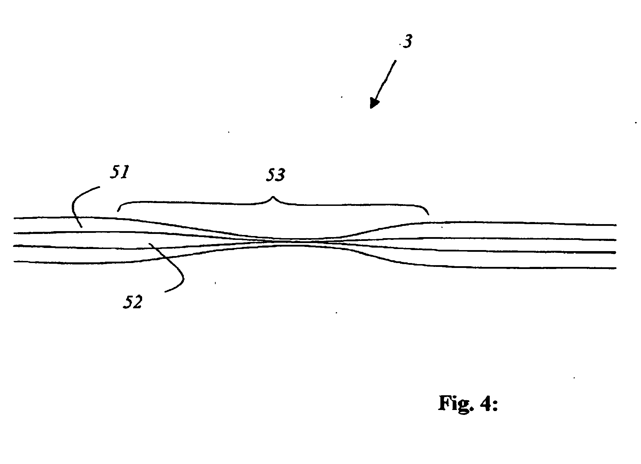

Fig. 4 zeigt schematisch eine nicht beanspruchte Ausführung des optischen Bauelements 3. In dieser Ausführung besteht das optische Bauelement 3 aus einer herkömmlichen Lichtleitfaser 51 mit einem Außendurchmesser von 925 µm und einem Faserkern 52, der einen Durchmesser von 6 µm aufweist. µm bereich einer 300 mm langen Verjüngung 53 ist der Aussendruchmesser der Lichtleitfaser 51 auf 1,8 µm reduziert. In diesem Bereich beträgt der Durchmesser des Faserkerns 52 nur noch Bruchteile von Mikrometern.

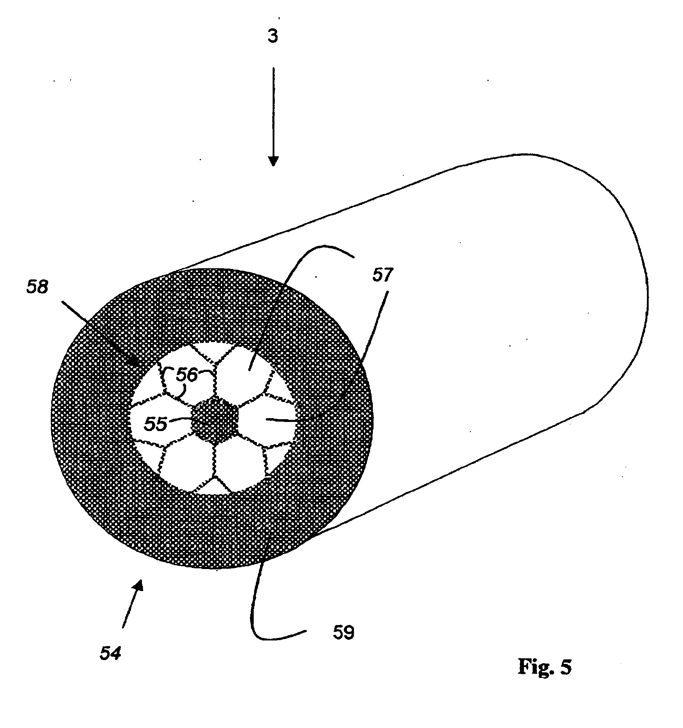

Fig. 5 zeigt eine Ausführung des optischen Bauelements 3. Dieses besteht aus Photonic-Band-Gap-Material, die eine besondere wabenförmige Mikrostruktur 54 aufweist Die gezeigte Wabenstruktur ist für die Generierung von breitbandigem Licht besonders geeignet. Der Durchmesser der inneren Kanüle 55 beträgt ca. 1,9 µm. Die innere Kanüle 55 ist von Glassteegen 56 umgeben. Die Glasstege 56 formen wabenförmige Hohlräume 57. Diese mikrooptischen Strukturelemente bilden gemeinsam einen zweiten Bereich 58, der von einem ersten Bereich 59, der Glasmantel ausgeführt ist, umgeben ist.

### Bezugszeichenliste

- 1: Pulslaser
- 2: Gepulster Laserstrahl
- 3: optisches Bauelement
- 4: Spektral breitbandiges Beleuchtungslicht
- 4a: Lichtstrahl
- 4b: Beobachtungsstrahlengang
- 5: Optik
- 6: Beleuchtungspinhole
- 7: Strahlteiler
- 8: Optik
- 9: Scanspiegel
- 10: Optik
- 11: Optik
- 12: Objektiv
- 13: Probe
- 14: Detektionspinhole
- 15: Detektor
- 16: AOTF (acousto optical tunable filter)
- 17: AOTF-Ansteuerung
- 18: Strahlsumpf
- 19: Optik
- 20: photonic-band-gap-Lichtleitfaser
- 20a: Eintrittsende
- 20b: Austrittsende
- 21: Optik
- 22: Motor
- 23: Revolver
- 24: Farbfilter
- 25: Detektor
- 26: Regelungselektronik
- 30: Leitung
- 32: Leitung
- 50: Beleuchtungsstrahlengang
- 50a: Verluststrahlengang
- 51: Lichtleitfaser
- 52: Faserkern
- 53: Verjüngung
- 54: Mikrostruktur
- 55: Kanüle
- 56: Glasstege
- 57: Hohlräume
- 58: zweiter Bereich
- 59: erster Bereich

## Patentansprüche

1. Scan-Mikroskop zum Untersuchen mikroskopischer Präparate,
das einen Laser (1) und ein optisches Mittel (12) umfasst, das das von dem Laser (1) erzeugte Licht auf eine zu untersuchende Probe (13) abbildet,
wobei ein akustooptisches Filter (AOTF 16) mit einer AOTF-Ansteuerung als Mittel zur Wellenlängenauswahl (16) und eine Lichtleitfaser (3, 20, 51) vorgesehen sind,
**dadurch gekennzeichnet, dass** zwischen dem als Pulslaser (1) ausgebildeten Laser und dem optischen Mittel (12) ein optisches Bauelement (3, 20, 51) vorgesehen ist, das das vom Pulslaser (1) erzeugte Licht bei einmaligem Durchlauf spektral verbreitert, derart, dass aus ihm ein spektral breitbandiges Beleuchtungslicht (4) austritt,
wobei die Lichtleitfaser (3, 20, 51) das optische Bauelement bildet,
die Mittel zur Wellenlängenauswahl Mittel (16) zum Abschwächen und/oder Ausblenden des Lichts mindestens einer Wellenlänge oder mindestens eines Wellenlängenbereichs umfassen und der Lichtleitfaser (3, 20, 51) nachgeordnet sind,
dass die Lichtleitfaser aus Photonic-Band-Gap-Material besteht,
und dass eine optische Diode zwischen dem Laser und der Lichtleitfaser vorgesehen ist, die eine Rückreflexion des Lichtstrahls des Lasers, die von den Enden der Lichtleitfaser herrührt, unterdrückt.

2. Scan-Mikroskop nach Anspruch 1, **dadurch gekennzeichnet, dass** Mittel (25, 26) zur Lichtleistungsstabilisierung vorgesehen sind.

3. Scan-Mikroskop nach Anspruch 2, **dadurch gekennzeichnet, dass** zur Lichtleistungsstabilisierung ein Regelkreis vorgesehen ist.

4. Scan-Mikroskop nach einem der vorherigen Ansprüche, **dadurch gekennzeichnet, dass** das Scan-Mikroskop ein Konfokalmikroskop ist.

5. Scan-Mikroskop nach einem der Ansprüche 1 bis 4, **dadurch gekennzeichnet, dass** das Austrittsende (20b) der Lichtleitfaser (20) als Beleuchtungsblende dient.

6. Beleuchtungseinrichtung für ein Scan-Mikroskop,
mit einem Laser (1), der eine Lichtaustrittsöffnung umfasst,
wobei ein akustooptisches Filter (AOTF 16) mit einer AOTF-Ansteuerung als Mittel zur Wellenlängenauswahl (16) und eine Lichtleitfaser (3, 20, 51) vorgesehen sind,
**dadurch gekennzeichnet, dass** der Laser als Pulslaser (1) ausgebildet ist, dessen Licht über die Lichtaustrittsöffnung einem optischen Bauelement (3, 20, 51) zugeführt ist, das das vom Pulslaser (1) erzeugte Licht bei einmaligem Durchlauf spektral verbreitert, derart, dass aus ihm ein spektral breitbandiges Beleuchtungslicht (4) austritt,
wobei die Lichtleitfaser (3, 20, 51) das optische Bauelement bildet,
die Mittel zur Wellenlängenauswahl Mittel (16, 18; 23, 24) zum Abschwächen und/oder Ausblenden des Lichts mindestens einer Wellenlänge oder mindestens eines Wellenlängenbereichs umfassen und der Lichtleitfaser (3, 20, 51) nachgeordnet sind,
dass die Lichtleitfaser aus Photonic-Band-Gap-Material besteht,
und dass eine optische Diode zwischen dem Laser und der Lichtleitfaser vorgesehen ist, die eine Rückreflexion des Lichtstrahls des Lasers, die von den Enden der Lichtleitfaser herrührt, unterdrückt.

## Claims

1. A scanning microscope for examining microscopic preparations, which comprises a laser (1) and optical means (12) which image the light generated by the laser (1) onto a specimen (13) to be examined, wherein are provided an acousto-optical filter (AOTF 16) having an AOTF drive as means for wavelength selection (16) and an optical fibre (3, 20, 51),
**characterized in that** between the laser which is designed as a pulse laser (1) and the optical means (12) an optical component (3, 20, 51) is provided which spectrally broadens the light generated by the pulse laser (1) given a single passage such that a spectrally broadband illuminating light (4) exits therefrom,
the optical fibre (3, 20, 51) forming the optical component,
the means for wavelength selection comprising means (16) for attenuating and/or blocking the light of at least one wavelength or at least one wavelength range and being arranged downstream of the optical fibre (3, 20, 51),
**in that** the optical fibre is composed of photonic band gap material,
and **in that** an optical diode is provided between the laser and the optical fibre, which diode suppresses a back-reflection of the light beam of the laser coming from the ends of the optical fibre.

2. The scanning microscope according to claim 1, **characterized in that** means (25, 26) for light power stabilization are provided.

3. The scanning microscope according to claim 2, **characterized in that** a closed loop control system is provided for light power stabilization.

4. The scanning microscope according to one of the preceding claims, **characterized in that** the scanning microscope is a confocal microscope.

5. The scanning microscope according to one of the claims 1 to 4, **characterized in that** the exit end (20b) of the optical fibre (20) serves as an illuminating diaphragm.

6. An illuminating device for a scanning microscope,
comprising a laser (1) which includes a light exit opening,
wherein are provided an acousto-optical filter (AOTF 16) having an AOTF drive as means for wavelength selection (16) and an optical fibre (3, 20, 51),
**characterized in that** the laser is designed as a pulse laser (1), the light of which is supplied via the light exit opening to an optical component (3, 20, 51) which spectrally broadens the light generated by the pulse laser (1) given a single passage such that a spectrally broadband illuminating light (4) exits therefrom,
the optical fibre (3, 20, 51) forming the optical component,
the means for wavelength selection comprising means (16 18; 23, 24) for attenuating and/or blocking the light of at least one wavelength or at least one wavelength range and being arranged downstream of the optical fibre (3, 20, 51),
**in that** the optical fibre is composed of photonic band gap material,
and **in that** an optical diode is provided between the laser and the optical fibre, which diode suppresses a back-reflection of the light beam of the laser coming from the ends of the optical fibre.

## Revendications

1. Microscope à balayage destiné à l'examen de préparations microscopiques,
lequel comprend un laser (1) et un moyen optique (12) reproduisant la lumière générée par le laser (1) sur un échantillon (13) à examiner,
dans lequel sont prévus un filtre acoustico-optique (AOTF 16) doté d'une commande AOTF en tant que moyen de sélection des longueurs d'onde (16), et une fibre optique (3, 20, 51),
**caractérisé en ce qu'**il est prévu, entre le laser réalisé sous la forme d'un laser pulsé (1) et le moyen optique (12), un élément optique (3, 20, 51) qui diffuse en un seul passage le spectre de la lumière générée par le laser pulsé (1) de telle manière qu'il en ressort une lumière d'éclairage (4) présentant un spectre à large bande,
la fibre optique (3, 20, 51) formant l'élément optique, les moyens de sélection des longueurs d'onde comprenant un moyen (16) d'atténuation et/ou de suppression de la lumière d'au moins une longueur d'onde ou d'au moins une plage de longueurs d'onde et étant disposés en aval de la fibre optique (3, 20, 51),
**en ce que** la fibre optique est constituée d'un matériau à bandes interdites photoniques,
et **en ce qu'**une diode optique est prévue entre le laser et la fibre optique, laquelle diode optique supprime une réflexion de retour du faisceau lumineux qui provient des extrémités de la fibre optique.

2. Microscope à balayage selon la revendication 1, **caractérisé en ce qu'**il est prévu un moyen (25, 26) destiné à stabiliser la puissance lumineuse.

3. Microscope à balayage selon la revendication 2, **caractérisé en ce que**, pour stabiliser la puissance lumineuse, il est prévu un circuit de régulation.

4. Microscope à balayage selon l'une des revendications précédentes, **caractérisé en ce que** le microscope à balayage est un microscope à foyer commun.

5. Microscope à balayage selon l'une des revendications 1 à 4, **caractérisé en ce que** l'extrémité de sortie (20b) de la fibre optique (20) sert de diaphragme d'éclairage.

6. Dispositif d'éclairage destiné à un microscope à balayage,
lequel comprend un laser (1) qui présente une ouverture de sortie de la lumière, dans lequel sont prévus un filtre acoustico-optique (AOTF 16) doté d'une commande AOTF en tant que moyen de sélection des longueurs d'onde (16), et une fibre optique (3, 20, 51),
**caractérisé en ce que** le laser est réalisé sous la forme d'un laser pulsé (1) dont la lumière est amenée, en passant par l'ouverture de sortie de la lumière, à un élément optique (3, 20, 51) qui diffuse en un seul passage le spectre de la lumière générée par le laser pulsé (1) de telle manière qu'il en ressort une lumière d'éclairage (4) présentant un spectre à large bande,
la fibre optique (3, 20, 51) formant l'élément optique, les moyens de sélection des longueurs d'onde comprenant un moyen (16, 18 ; 23, 24)) d'atténuation et/ou de suppression de la lumière d'au moins une longueur d'onde ou d'au moins une plage de longueurs d'onde et étant disposés en aval de la fibre optique (3, 20, 51),
**en ce que** la fibre optique est constituée d'un matériau à bandes interdites photoniques,
et **en ce qu'**une diode optique est prévue entre le laser et la fibre optique, laquelle diode optique supprime une réflexion de retour du faisceau lumineux qui provient des extrémités de la fibre optique.
